**Europäisches Patentamt**

**European Patent Office**

**Office européen des brevets**

(19)

(11) Veröffentlichungsnummer: **0 036 192**
**A2**

(12) # EUROPÄISCHE PATENTANMELDUNG

(21) Anmeldenummer: **81101861.3**

(22) Anmeldetag: **13.03.81**

(51) Int. Cl.³: **F 24 J 3/02**

(30) Priorität: **19.03.80 DE 3010476**

(43) Veröffentlichungstag der Anmeldung:
**23.09.81 Patentblatt 81/38**

(84) Benannte Vertragsstaaten:
**AT BE CH DE FR GB IT LI LU NL**

(71) Anmelder: **Gebrüder Uhl GmbH & Co KG**
**Bergstrasse 17**
**D-7981 Vogt bei Ravensburg(DE)**

(72) Erfinder: **Möller, Rolf W., Dr.-Ing., Dipl.-Ing.**
**Epplingser Halde 14**
**D-7988 Wangen/Allg.(DE)**

(72) Erfinder: **von Tardy-Tuch, Michael, Dipl.-Ing.**
**D-8351 Bernried-Hochacker**
**Kreis Deggendorf(DE)**

(74) Vertreter: **Engelhardt, Guido**
**Ehlersstrasse 17**
**D-7990 Friedrichshafen1(DE)**

(54) **Einrichtung zur Aufnahme oder Abgabe von Wärmeenergie.**

(57) Bei einer Einrichtung (1) zur Aufnahme oder Abgabe von Wärmeenergie mittels eines strömbaren Mediums als Wärmeträger, insbesondere einem Solarabsorber, die aus einem oder mehreren Sammelrohren (11) und einer oder mehreren Lamellen (21), die jeweils mit mindestens einem rohrartigen an ein Sammelrohr (11) flüssigkeitsdicht angeschlossenen Kanal (23) versehen sind, besteht, ist das Sammelrohr (11) mit in dessen Außenmantelfläche eingearbeiteten, in dessen Längsrichtung verlaufenden Einschubkanälen (12) versehen, in die Halteleisten (15) einsetzbar sind.

Durch diese Ausgestaltung des Sammelrohres (11) ist es möglich, die Halteleisten (15) unabhängig von diesem zu bearbeiten und an beliebigen Stellen in dieses einzusetzen, so daß zur Verbindung einer Lamelle mit einem Sammelrohr lediglich dieses anzubohren ist und der Anschluß somit nahezu überall vorgenommen werden kann. Eine vielseitige Verwendbarkeit und eine große Anpaßbarkeit ist demnach gegeben.

FIG. 1

Gebrüder Uhl GmbH & Co. KG.
7981 Vogt über Ravensburg

Einrichtung zur Aufnahme oder Abgabe von Wärmeenergie sowie Sammelrohr für eine derartige Einrichtung

Die Erfindung bezieht sich auf eine Einrichtung zur Aufnahme
oder Abgabe von Wärmeenergie mittels eines strömbaren Mediums als Wärmeträger, insbesondere einen Solarabsorber, bestehend aus einem oder mehreren Sammelrohren und einer oder
mehreren Lamellen, die jeweils mit mindestens einem rohrartigen an ein Sammelrohr flüssigkeitsdicht angeschlossenen
Kanal versehen ist, sowie auf die Ausgestaltung des bei einer
derartigen Einrichtung verwendbaren Sammelrohres.

Durch die DE-OS 28 27 986 ist ein Solarabsorber bekannt,
der aus an einem Querrohr angeschlossenen Lamellen mit
well-plattenförmigem Querschnitt zusammengesetzt ist. An
der Rückseite der Lamellen ist hierbei jeweils ein rohrartiger Kanal vorgesehen, der im Kreuzungsbereich über Verbindungsbohrungen an das als Querrohr bezeichnete Sammelrohr
angeschlossen ist. Mittels einer Schraubverbindung sind die
Lamellen an den Sammelrohren befestigt, wobei zwischen diesen eine Dichtung eingesetzt ist. Und zur Verriegelung der
Lamellen untereinander sind deren Längsränder mit hakenförmigen Stegen versehen.

./.

Dieser bekannte Solarabsorber ist auf die Verwendung als
Dachabdeckung beschränkt und mit erheblichen Mängeln
konstruktiver und fertigungstechnischer Art behaftet. Beispielsweise läßt die Art der Verbindung keine oder nur
eine geringe Veränderung des Kreuzungswinkels zwischen
einer Lamelle und dem Sammelrohr zu, so daß eine Anpassung an die örtlichen Gegebenheiten oftmals nicht oder nur
unter Schwierigkeiten möglich ist. Außerdem ist hierbei
der Dichtring zwischen der Lamelle und dem Sammelrohr, die
zur Befestigung mit seitlich abstehenden Flanschen ausgestattet sind, an den Anlageflächen weder innen noch außen
abgestützt, so daß das Dichtungsmaterial durch die hohen
Belastungen seitlich ausweichen kann. Auch sind die Verbindungsbohrungen nicht zentriert. Dies führt vielfach zu
einer ungenauen Montage und zu einem erhöhten Strömungswiderstand für das Wärmeträgermedium. Vor allem aber ist
von Nachteil, daß zur Verbindung der Lamellen mit den
als glatte Rohre ausgebildeten Sammelrohre an diese Flansche
angeschweißt werden müssen. Durch das Anschweißen werden
aber die Sammelrohre und/oder die Lamellen verzogen, so
daß trotz des großen Arbeitsaufwandes die flüssigkeitsdichte Verbindung beeinträchtigt wird und ein variables Anschließen der Lamellen an die Sammelrohre nicht möglich ist.

Aufgabe der Erfindung ist es daher, eine Einrichtung zur
Aufnahme oder Abgabe von Wärmeenergie zwischen einem in
dieser strömenden Wärmeträgermedium und der diese umgebenden
Atmosphäre zu schaffen, bei der nicht nur eine äußerst zuverlässige und leicht vorzunemende Verbindung zwischen den
Lamellen und den Sammelrohren gegeben ist, sondern bei der
auch ohne Schwierigkeiten ein Anschluß an beliebigen Stellen
des Sammelrohres vorzunemen ist, so daß problemlos eine Anpassung an örtliche Gegebenheiten an der Baustelle erfolgen
kann. Der dazu erforderliche Bau- und Arbeitsaufwand, vor
allem bei der Montage soll äußerst gering gehalten werden,
dennoch soll

./.

eine stets einwandreie flüssigkeitsdichte Verbindung und
eine vielseitige Verwendbarkeit gegeben sein.

Gemäß der Erfindung wird dies dadurch erreicht, daß das
Sammelrohr mit in dessen Außenmantelfläche eingearbeiteten in Längsrichtung verlaufenden Einschubkanälen versehen ist, in die Halteleisten einsetzbar sind.

Zweckmäßig ist es hierbei, das Sammelrohr mit einer mehreckigen, vorzugsweise quadratischen Außenkontur auszustatten und die Einschubkanäle an einer oder mehreren Ecken
des Sammelrohres vorzusehen.

Des weiteren ist es vorteilhaft, die im Eckbereich des
Sammelrohres vorgesehenen Einschubkanäle jeweils als
eine nach außen offene, vorzugsweise im Querschnitt winkelförmige oder rechteckige und mit einer oder mehreren
Hinterschneidungen versehene Freisparung auszubilden, in
die die Halteleisten mittels angeformter Vorsprünge eingreifen, wobei die Hinterschneidungen als achsparallele
Schraubkanäle mit etwa kreisförmigem Querschnitt ausgestattet sein können.

Angebracht ist es ferner, die Halteleisten als Winkelstücke auszubilden, an deren Schenkeln in die Hinterschneidungen der Einschubkanäle eingreifende Ansätze angeformt
sind, und diese derart zu gestalten, daß bei einer in einen
Einschubkanal eingesetzten Halteleiste durch deren Außenseiten das Sammelrohr im Eckbereich in der Außenkontur ausgefüllt ist, wobei die Halteleisten an einer oder beiden Außenseiten mit einer oder mehreren, vorzugsweise in Achsrichtung
verlaufenden Bohrrillen versehen sein können.

Das Sammelrohr kann ferner an den Enden jeweils mit einer, vorzugsweise nach innen gewölbten Endkappe flüssigkeitsdicht verschlossen sein.

./.

Zur Verbindung des Sammelrohres mit einer Lamelle ist es nach einer Weiterbildung vorteilhaft, jeweils ein in diese einsetzbares hohles Verbindungsstück vorzusehen, das an den Enden zur Aufnahme eines Dichtungselementes eine nach außen gerichtete Aufbördelung oder einen mit einer Aussparung versehenen Bund aufweist, und das Verbindungsstück an den Enden mit Anschlußflanschen zu versehen, mittels denen dieses an dem Sammelrohr und der Lamelle zu befestigen ist.

Zweckmäßig ist es hierbei, die Flansche verdrehbar auf dem Verbindungsstück zu halten und die Aufbördelung etwa unter einem Winkel von 45$^{\circ}$ nach außen von dem Verbindungsstück abstehen zu lassen. Des weiteren kann in das Verbindungsstück im Bereich des Anschlusses an das Sammelrohr und/oder den Kanal der Lamelle jeweils ein Stützrohr eingesetzt und das Verbindungsstück als Winkelstück ausgebildet sein.

Zur einfachen Halterung der Lamellen ist es ferner angebracht, die Lamelle jeweils mit zwei, vorzugsweise außerhalb des rohrartigen Kanals angeordneten parallel zu diesem verlaufenden Schraubkanälen zu versehen.

Die vorzugsweise im Strangpreßverfahren hergestellten Lamellen sind in einfacher Weise als Flachprofil auszubilden und an einer oder beiden äußeren Längskanten mit einer in Richtung des rohrartigen Kanals gerichteten Abkantung zu versehen, wobei eine oder beide der äußeren Abkantungen der Lamelle einen U-förmigen zu deren Stirnseite offenen Querschnitt aufweisen können.

Die Flansche der Verbindungsstücke sind leicht mit dem Sammelrohr über die in dieses einsetzbare Halteleisten und mit den Lamellen über die an diesen angeformten Schraubkanälen zu verschrauben.

./.

Zweckmäßig ist es ferner, die rohrartigen Kanäle der
Lamelle jeweils über einen Zwischensteg an dem Flachprofil
anzuformen, so daß ohne Schwierigkeiten die Enden der rohrartigen Kanäle beispielsweise durch Abfräsen auch zurückgesetzt werden können.

Die Sammelrohre sind in sehr einfacher und vorteilhafter
Weise mit den Lamellen zu einer Fassadenverkleidung, einer
Sonnenblende, einem Zaun oder dgl. zusammenzusetzen.

Die gemäß der Erfindung ausgebildete Einrichtung zur Aufnahme oder Abgabe von Wärmeenergie ist nicht nur sehr einfach in der konstruktiven Ausgestaltung und damit auf wirtschaftliche Weise herstellbar, sondern auch leicht und ohne
großen Arbeitsaufwand zu montieren. Wird nämlich das Sammelrohr mit Einschubkanälen versehen, in die Halteleisten
einsetzbar sind, ist es ohne weiteres möglich, die Halteleisten unabhängig von dem Sammelrohr zu bearbeiten und
an beliebigen Stellen in dieses einzusetzen, so daß zur
Verbindung einer Lamelle mit dem Sammelrohr lediglich dieses
anzubohren ist. Eine vielseitige Verwendbarkeit, wobei eine
Anpassung an die jeweiligen Gegebenheiten ohne Schwierigkeiten
vorzunehmen ist, ist demnach bei einfacher Handhabung gewährleistet.

Auch muß nicht das gesamte Sammelrohr ersetzt oder ein neuer
Flansch angeschweißt werden, wenn einmal ein oder mehrere
Gewindegänge für die Befestigungsschrauben nicht mehr verwendbar sind. Dazu genügt es, die Halteleiste oder nur ein
Teil von dieser zu erneuern. Auch wird das Anbohren der Halteleisten durch die auf deren Außenseiten bereits vorgesehenen
Bohrrillen sehr erleichtert. Die vorzugsweise als Schraubkanäle ausgebildeten Einschubkanäle ermöglichen des weiteren
auch eine zuverlässige, formschlüssige und dennoch einfache
Verbindung mit den Halteleisten, da diese in Längsrichtung

./.

ineinander geschoben werden, und durch das Anschrauben
der Flansche wird eine unverrückbare Halterung geschaffen.

Mit Hilfe der Einschubkanäle können ferner auch auf einfache
Weise an den Sammelrohren Endkappen befestigt werden. Und
durch die Halteleisten besteht zugleich die Möglichkeit,
das Sammelrohr je nach Bedarf an einer oder mehreren Seitenkanten zu befestigen oder Befestigungsmittel anzubringen.
Das Sammelrohr ist daher ohne weiteres als tragende Unterkonstruktion für die Lamellen verwendbar, ohne daß es
eines zusätzlichen Aufwandes bedarf.

Von großem Vorteil ist es ferner, insbesondere bei Verwendung
als Sonnenblende oder als Zaun, daß durch die erfindungsgemäß ausgebildete Verbindung zwischen den Lamellen und den
Sammelrohren der Kreuzungswinkel zwischen diesen uneingeschränkt verändert werden kann. Durch die drehbare Halterung
der Flansche auf den Verbindungsstücken können nämlich die
Lamellen beliebig bei der Montage gegenüber den Sammelrohren
in ihrer Lage gedreht werden, ohne daß dies einen zusätzlichen Aufwand bedarf. Erst durch das Anziehen der Befestigungsschrauben wird die sichere und flüssigkeitsdichte Verbindung hergestellt. Und sind die Verbindungsstücke als
Winkelstücke ausgebildet, ist sogar eine dreidimensionale
Verstellbarkeit gegeben.

Die Dichtung zwischen einer Lamelle und einem Sammelrohr, die
vorzugsweise als O-Ring ausgebildet sein sollte, wird bei der
vorschlagsgemäßen Ausgestaltung auch außen durch die Aufbördelung bzw. den Bund und innen durch das Stützrohr gehalten. Dadurch kann diese auch bei hohen Beanspruchungen nicht
nach einer Seite ausweichen und die Dichtheit beeinträchtigen.
Das dünnwandige Stützrohr bewirkt außerdem eine Zentrierung
der Verbindungsbohrung und schließt damit innen die Verbindungsstelle ab, so daß die Strömung des Wärmeträgermediums nicht beeinträchtigt wird.

./.

Durch die beiden vorzugsweise ausserhalb des rohrartigen
Kanals an der Lamelle angeformten Schraubkanäle ist des
weiteren eine leichte Befestigung der Verbindungsstücke
an der Lamelle möglich, ohne dass an dieser Flansche anzuschweissen sind. Die Verbindungsstücke können auf diese
Weise angeschraubt werden, ohne dass der Kanal angebohrt
werden muss. Besondere Abdichtungen für die Befestigungsschrauben sind somit nicht erforderlich. Auch ist bei dieser Art der Befestigung eine relativ grosse Fertigungstoleranz zulässig.

Zur Erhöhung der Festigkeit sind die äusseren Längskanten
der Lamellen abgewinkelt gestaltet. Dadurch wird auch die
Verletzungsgefahr für Mensch und Tier verringert. Und sollen die Lamellen als Fassadenverkleidung verwendet werden,
können die Abkantungen als ein nach aussen offenes U ausgebildet werden, das bei mehreren aneinander gereihten
Lamellen als Regenrinne für das abzulaufende Wasser dient.

Im Regelfall weist die Lamelle auf der Rückseite nur einen
rohrartigen Kanal auf. Dies ist dann von Vorteil, wenn eine
beliebige Verdrehbarkeit der Lamelle gegenüber dem Sammelrohr gegeben sein soll. Bei grösseren Lamellen können jedoch auch zwei Kanäle vorgesehen werden. Und da der rohrartige Kanal über einen Zwischensteg an der Lamelle angeformt ist, ist es ohne weiteres möglich, das Ende des Kanals
abzufräsen, so dass die Verbindung mit dem Sammelrohr durch
die Lamelle völlig abgedeckt wird und somit nicht sichtbar
ist.

Weitere Einzelheiten der gemäss der Erfindung ausgebildeten
Einrichtung zur Aufnahme oder Abgabe von Wärmeenergie bzw.
des Sammelrohres sind

./.

den in der Zeichnung dargestellten Ausführungsbeispielen,
die nachfolgend im einzelnen erläutert sind, zu entnehmen.
Hierbei zeigen:

Fig. 1   die aus einem Sammelrohr und einer an
         dieses angeschlossenen Lamelle bestehende
         Einrichtung, teilweise im Schnitt,

Fig. 2   einen Schnitt nach der Linie II-II der
         Fig. 1,

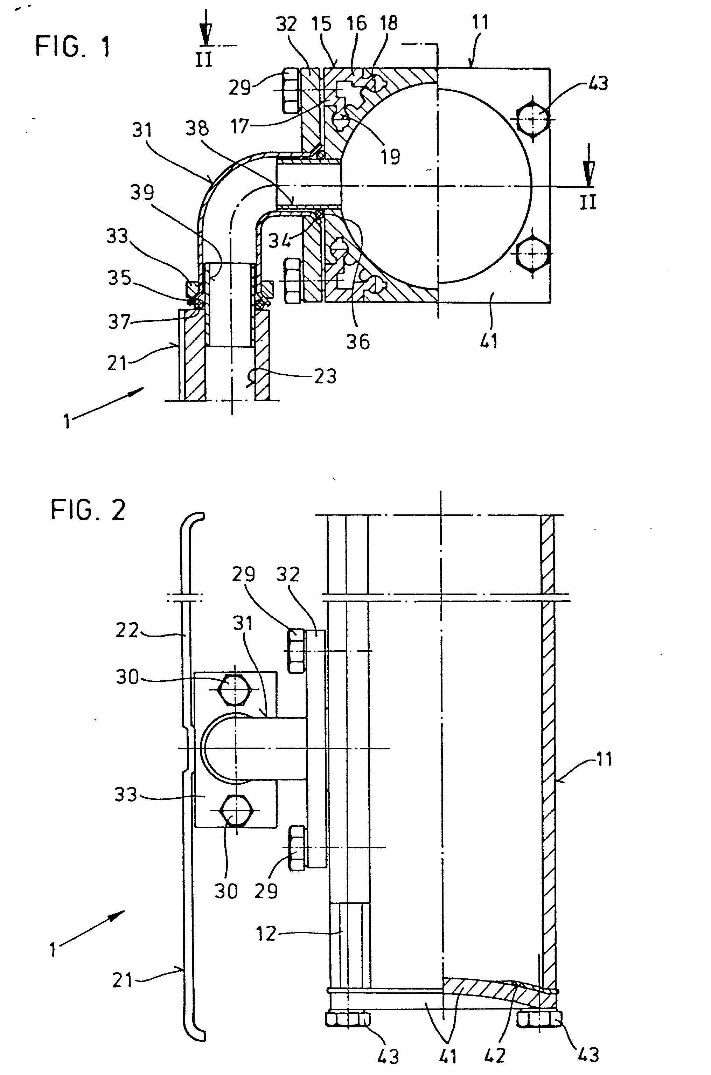

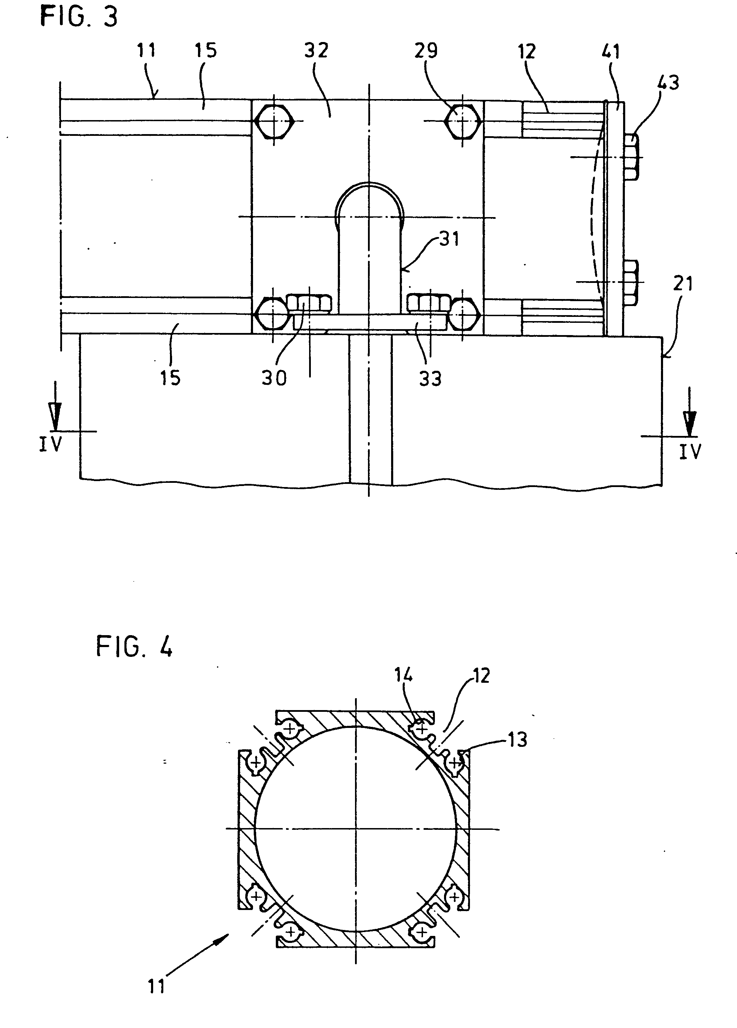

Fig. 3   die Einrichtung nach Fig. 1 in Draufsicht,

Fig. 4   das Sammelrohr der Einrichtung nach Fig. 1
         als Einzelteil im Schnitt,

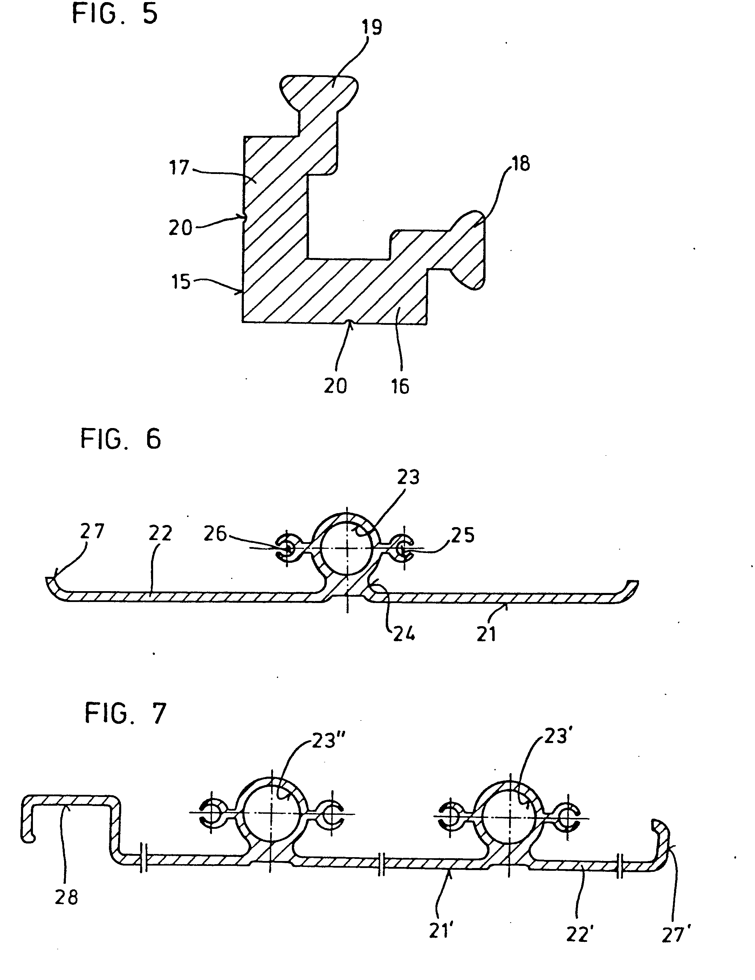

Fig. 5   die bei der Einrichtung nach Fig. 1 vorgesehene Halteleiste, ebenfalls im Schnitt
         und in einem vergrössertem Maßstab,

Fig. 6   einen Schnitt nach der Linie IV-IV der
         Fig. 3 durch die Lamelle,

Fig. 7   eine andersartige Ausgestaltung einer Lamelle
         in einem Schnitt gemäss Fig. 6,

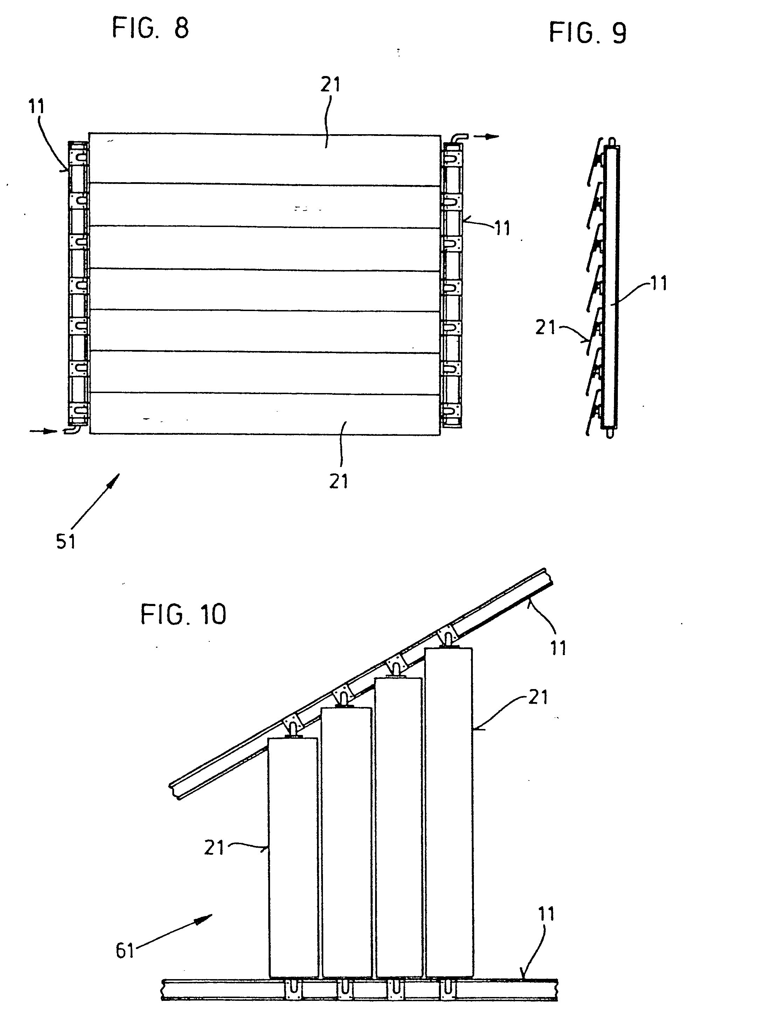

Fig. 8   die Einrichtung nach Fig. 1 in einer Ausge-
         staltung als Zaun- oder Sonnenblende,

Fig. 9   den Zaun nach Fig. 8 in Seitenansicht
         und

Fig.1o   die Einrichtung nach Fig. 1 in einer Ausgestaltung als winkelförmig verlaufende
         Fassadenverkleidung.

Die in den Fig. 1 bis 3 dargestellt und mit 1 bezeichnete Einrichtung zur Aufnahme oder Abgabe von Wärmeenergie besteht im wesentlichen aus einem Sammelrohr 11 und einer Lamelle 21, die in besonderer Weise mittels eines Verbindungsstückes 31 flüssigkeitsdicht miteinander verbunden sind.

Zur Befestigung des Verbindungsstückes 31 oder einer unmittelbaren Halterung an einem Bauteil ist das Sammelrohr 11 mit in dessen Aussenmantelfläche eingearbeiteten in Längsrichtung verlaufenden Einschubkanälen 12 versehen, in die Halteleisten 15 einsetzbar sind. Und auf dem Verbindungsstück 31 ist ein Flansch 32 drehbar gehalten, der somit leicht auszurichten und mittels Schrauben 29 an den Halteleisten 15 zu befestigen ist. Die Einschubkanäle 12 sind hierbei mit Hinterschneidungen 13 und 14 ausgestattet und als Schraubkanäle ausgebildet, in die an den Schenkeln 16 und 17 der winkelförmig gestalteten Halteleisten 15 angeformte mit Gegenflächen versehene Vorsprünge 18 und 19 eingreifen. Auf diese Weise ist nicht nur eine zuverlässige Halterung der Halteleisten 15 in den Einschubkanälen gewährleistet, sondern diese Teile werden durch das Anziehen der Schrauben 29 zusätzlich miteinander verspannt, so dass eine unverrückbare Befestigung gegeben ist. Und da die Halteleisten 15 auf ihrer Aussenseite mit Bohrrillen 2o versehen sind, ist ausserdem an der Baustelle das Verbohren ohne Schwierigkeiten vorzunehmen.

Die Lamelle 21 ist etwa in gleicher Weise an dem Verbindungsstück 31, mittels dem eine flüssigkeitsdichte Verbindung zwischen dem Sammelrohr 11 und dem an der Lamelle 21, die als Flachprofil 22 ausgebildet ist, vorgesehenen rohrartigen Kanal 23 herzustellen ist, befestigt. Auf dem Verbindungsstück 31 ist wiederum ein Flansch 33 drehbar gehalten, der

./.

mit Hilfe zweier Schrauben 3o, die in, wie es im einzelnen der Fig. 6 entnommen werden kann, an dem rohrförmigen Kanal 23 angeformte Schraubkanäle 25 und 26 eingreifen, an der Lamelle 21 zu befestigen ist. Ausserdem ist der rohrförmige Kanal 23 über einen Zwischensteg 24 an der vorzugsweise im Strangpressverfahren herzustellenden Lamelle 21, deren äussere Längskanten mit Abkantungen 27 versehen sind, angeformt.

Um eine flüssigkeitsdichte Verbindung zwischen dem Sammelrohr 11 und der Lamelle 21 herzustellen, ist das mit diesen verbundene Verbindungsstück 31 an den Enden mit Aufbördelungen 34 bzw. 35 versehen und in den dadurch geschaffenen Raum ist jeweils eine Dichtung 36 und 37 eingesetzt. Des weiteren ist in das Verbindungsstück 31 im Anschlussbereich jeweils ein dünnwandiges Stützrohr 38 und 39 eingeschoben. Durch das Anziehen der Schrauben 29 und 30 werden somit die als O-Ringe ausgebildeten Dichtungen 36 und 37 gegen die Anlageflächen der Aufbördelungen 34 und 35 sowie gegen das Sammelrohr 11 bzw. die Stirnfläche des rohrförmigen Kanals 23 gepresst, und zwar ohne seitlich ausweichen zu können, so dass auf sehr einfache Weise eine dennoch flüssigkeitsdichte Ver bindung geschaffen ist.

Das freie Ende des Sammelrohres 11 ist durch eine nach innen gewölbte Endkappe 41 ebenfalls flüssigkeitsdicht verschlossen. Zwischen der Endkappe 41 und dem Sammelrohr 11 ist dazu eine Dichtung 42 eingesetzt. Und mittels Schrauben 43, die in die als Schraubkanäle ausgebildeten Hinterschneidungen 13 und 14 der Einschubkanäle 12 eingreifen, ist auf einfache Weise eine sichere Befestigung der Endkappe 41, ohne dass zusätzliche Vorarbeiten vorzunehmen sind, möglich.

./.

Die Lamelle 21' nach Fig. 7, die ebenfalls als im Strangpreßverfahren hergestelltes Flachprofil 22' ausgebildet
ist, ist mit zwei rohrförmigen Kanälen 23' und 23'' versehen, die in gleicher Weise wie bei dem Ausführungsbeispiel nach Fig. 1 an das Sammelrohr 11 anzuschließen sind.
Die seitlichen Längskanten der Lamelle 21' sind wiederum
mit Abkantungen 27' und 28 versehen, wobei die Abkantung
28 einen U-förmigen, zur Stirnseite der Lamelle 21' offenen
Querschnitt aufweist. Auf diese Weise kann die Lamelle 21'
als Fassadenverkleidung verwendet werden. Bei mehreren hintereinander gereihten Lamellen 21' dient die Abkantung 28
als Regenrinne.

In den Fig. 8 und 9 sind Ausführungsbeispiele der nach den
Fig. 1 bis 7 gestalteten Einrichtung gezeigt. Gemäß den
Fig. 8 und 9 sind mehrere zwischen zwei Sammelrohren 11
angeordnete und an diese angeschlossene Lamellen 21 zu
einem als Zahn- oder Sonnenblende 51 ausgebildeten Solarabsorber zusammengesetzt, nach Fig. 1o bilden die mit den
winkelig zueinander verlaufenden Sammelrohren 11 verbundenen
Lamellen 21 eine Fassadenverkleidung 61.

12. März 1981 e-1
A 8747 EP

Gebrüder Uhl GmbH & Co. KG.                          0036192

7981 Vogt über Ravensburg

P a t e n t a n s p r ü c h e :

1. Einrichtung zur Aufnahme oder Abgabe von Wärmeenergie
   mittels eines strömbaren Mediums als Wärmeträger, insbesondere Solarabsorber, bestehend aus einem oder mehreren
   Sammelrohren und einer oder mehreren Lamellen, die jeweils
   mit mindestens einem rohrartigen an ein Sammelrohr flüssigkeitsdicht angeschlossenen Kanal versehen sind,
   d a d u r c h   g e k e n n z e i c h n e t ,
   daß das Sammelrohr (11) mit in dessen Außenmantelfläche
   eingearbeiteten, in dessen Längsrichtung verlaufenden Einschubkanälen (12) versehen ist, in die Halteleisten (15)
   einsetzbar sind.

2. Sammelrohr für eine Einrichtung zur Übertragung von Wärmeenergie zwischen einem in der Einrichtung strömenden Wärmeträgermedium und der die Einrichtung umgebenden Atmosphäre,
   insbesondere Solarabsorber, bestehend aus einer oder mehreren
   wärmeab- oder aufnehmenden sowie wärmeleitenden Lamellen, an
   die jeweils mindestens ein abgeschlossener Kanal angeformt
   ist, der über je eine Flansch-Schraubverbindung im Bereich
   seiner beiden Enden an ein Sammelrohr zur Zufuhr und/oder
   ein Sammelrohr zur Abfuhr des Wärmeträgermediums flüssigkeitsdicht anschließbar ist,
   d a d u r c h   g e k e n n z e i c h n e t ,
   daß das Sammelrohr (11) jeweils mit in seiner Außenmantelfläche eingearbeiteten, in seiner Längsrichtung verlaufenden
   Einschubkanälen (12) versehen ist, in die Halteleisten (15)
   einsetzbar sind.

                                                   ./.

3. Einrichtung nach Anspruch 1 oder 2,

   d a d u r c h   g e k e n n z e i c h n e t ,

   daß das Sammelrohr (11) eine mehreckige, vorzugsweise
   quadratische Außenkontur aufweist und daß die Einschubkanäle (12) an einer oder mehreren Ecken des
   Sammelrohres (11) angeordnet sind.

4. Einrichtung nach einem der Ansprüche 1 bis 3,

   d a d u r c h   g e k e n n z e i c h n e t ,

   daß die im Eckbereich des Sammelrohres (11) vorgesehenen
   Einschubkanäle (12) jeweils als eine nach außen offene,
   vorzugsweise im Querschnitt winkelförmige oder rechteckige und mit einer oder mehreren Hinterschneidungen
   (13, 14) versehene Freisparung ausgebildet sind, in
   die die Halteleisten (15) mittels angeformter Vorsprünge (18, 19) eingreifen.

5. Einrichtung nach einem der Ansprüche 1 bis 4,

   d a d u r c h   g e k e n n z e i c h n e t ,

   daß die Hinterschneidungen (13, 14) der Einschubkanäle
   (12) als achsparallele Schraubkanäle mit etwa kreisförmigem Querschnitt ausgebildet sind.

6. Einrichtung nach einem der Ansprüche 1 bis 5,

   d a d u r c h   g e k e n n z e i c h n e t ,

   daß die Halteleisten (15) als Winkelstücke ausgebildet
   sind, an deren Schenkeln (16, 17) in die Hinterschneidungen (13, 14) der Einschubkanäle (12) eingreifende
   Ansätze (18, 19) angeformt sind.

./.

7. Einrichtung nach Anspruch 6,

d a d u r c h   g e k e n n z e i c h n e t ,

daß die Halteleisten (15) derart gestaltet sind, daß bei einer in einen Einschubkanal (12) eingesetzten Halteleiste (15) durch deren Außenseiten das Sammelrohr (11) im Eckbereich in der Außenkontur ausgefüllt ist.

8. Einrichtung nach einem der Ansprüche 1 bis 7,

d a d u r c h   g e k e n n z e i c h n e t ,

daß die Halteleisten (15) an einer oder beiden Außenseiten mit einer oder mehreren, vorzugsweise in Achsrichtung verlaufenden Bohrrillen (2o) versehen sind.

9. Einrichtung nach einem der Ansprüche 1 bis 8,

d a d u r c h   g e k e n n z e i c h n e t ,

daß das Sammelrohr (11) an den Enden jeweils mit einer, vorzugsweise nach innen gewölbten Endkappe (41) flüssigkeitsdicht verschlossen ist.

10. Einrichtung nach einem der Ansprüche 1 bis 9,

d a d u r c h   g e k e n n z e i c h n e t ,

daß zur Verbindung des Sammelrohres (11) mit einer Lamelle (21) jeweils ein in diese einsetzbares hohles Verbindungsstück (31) vorgesehen ist, das an den Enden zur Aufnahme eines Dichtungselementes (36, 37) eine nach außen gerichtete Aufbördelung (34, 35) oder einen mit einer Aussparung versehenen Bund aufweist, und daß das Verbindungsstück (31) an den Enden mit Anschlußflanschen (32, 33) versehen ist, mittels denen dieses an dem Sammelrohr (11) und der Lamelle (21) zu befestigen ist.

./.

11. Einrichtung nach Anspruch 1o,

   d a d u r c h   g e k e n n z e i c h n e t ,

   daß die Anschlußflansche (32, 33) der Verbindungsstücke
   (31) verdrehbar auf diesen gehalten sind.

12. Einrichtung nach Anspruch 1o oder 11,

   d a d u r c h   g e k e n n z e i c h n e t ,

   daß die Aufbördelungen (34, 35) der Verbindungsstücke
   (31) etwa unter einem Winkel von 45$^{\circ}$ nach außen von dem
   Verbindungsstück (31) abstehen.

13. Einrichtung nach einem der Ansprüche 1o bis 12,

   d a d u r c h   g e k e n n z e i c h n e t ,

   daß in das Verbindungsstück (31) im Bereich des Anschlusses an das Sammelrohr (11) und/oder den Kanal (23)
   der Lamelle (21) jeweils ein Stützrohr (38, 39) eingesetzt
   ist.

14. Einrichtung nach einem der Ansprüche 1o bis 13,

   d a d u r c h   g e k e n n z e i c h n e t ,

   daß das Verbindungsstück (31) als Winkelstück ausgebildet
   ist.

15. Einrichtung nach einem der Ansprüche 1 bis 14,

   d a d u r c h   g e k e n n z e i c h n e t ,

daß die Lamelle (21) jeweils mit zwei, vorzugsweise außerhalb des rohrartigen Kanals (23) angeordneten parallel zu diesem verlaufenden Schraubkanälen (25, 26) versehen ist.

16. Einrichtung nach einem der Ansprüche 1 bis 15,

    d a d u r c h   g e k e n n z e i c h n e t ,

    daß die vorzugsweise im Strangpreßverfahren hergestellte Lamelle (21) als Flachprofil (22) ausgebildet ist und an einer oder beiden äußeren Längskanten eine in Richtung des rohrartigen Kanals (23) gerichtete Abkantung (27, 28) aufweist.

17. Einrichtung nach Anspruch 16,

    d a d u r c h   g e k e n n z e i c h n e t ,

    daß eine oder beide der äußeren Abkantungen (28) der Lamelle (21) einen U-förmigen zu deren Stirnseite offenen Querschnitt aufweisen.

18. Einrichtung nach einem der Ansprüche 1 bis 17,

    d a d u r c h   g e k e n n z e i c h n e t ,

    daß die Flansche (32, 33) der Verbindungsstücke (31) mit dem Sammelrohr (11) über die in dieses einsetzbare Halteleisten (15) und mit den Lamellen (21) über die an diesen angeformten Schraubkanälen (25, 26) verschraubt sind.

19. Einrichtung nach einem der Ansprüche 1 bis 18,

    d a d u r c h   g e k e n n z e i c h n e t ,

./.

daß die rohrartigen Kanäle (23) der Lamelle (21) jeweils
über einen Zwischensteg (24) an dem Flachprofil (22) angeformt sind.

20. Einrichtung nach einem der Ansprüche 1 bis 19,

d a d u r c h   g e k e n n z e i c h n e t ,

daß die Sammelrohre (11) mit den Lamellen (21) zu einer
Fassadenverkleidung (61), einer Sonnenblende (51), einem
Zaun oder dgl. zusammengesetzt sind.

12. März 1981
A 8747 EP

0036192

FIG. 1

FIG. 2

MAERZ 80

A 8747

FIG. 3

FIG. 4

0036192

FIG. 5

FIG. 6

FIG. 7

A 8747

FIG. 8

FIG. 9

FIG. 10